# EUROPEAN PATENT APPLICATION

(11) **EP 0 554 227 A1**
(43) Date of publication of application: **04.08.1993**
(21) Application number: 93830024.1
(22) Date of filing: 28.01.1993
(51) Int. Cl.: F01C 1/07, F01C 1/063, F02B 53/02

(54) **Engine with rotary pistons having a cyclic spend variation and driving means**

(30) Priority: 30.01.1992 IT PI920002
(71) Applicant: Doveri, Nicolò, I-56025 Pontedera (Pisa) (IT); Tamburini, Alessandro, I-56025 Pontedera (Pisa) (IT)
(72) Inventor: Doveri, Nicolò, I-56025 Pontedera (Pisa) (IT); Tamburini, Alessandro, I-56025 Pontedera (Pisa) (IT)
(74) Representative: Bardini, Marco Luigi

(57) **Abstract**

An improved rotary internal combustion engine comprising a cylindrical chamber (1) in which two-double sector walls (2,3,4,5) rotating about a driving-shaft (12) coaxial with it are housed and where intake and exhaust ports (22,23) as well as ignition means (24) are provided for. A first double sector wall (2,3) comprises a first sleeve (6) with which there are rotatably engaged the driving-shaft (12) and a second sleeve (7) integral to the other double sector wall (4,5). Each sleeve (6,7) pivotally engages (10,11) at one end with a connecting rod (20,21) supporting a pin (18,19) which extends from a throw (25,26) of a planetary gear shaft (15,16) of an epiciclic train keyed on said driving-shaft (12) and on a crankcase (13) flanged to the cylindrical chamber (1). Inside the latter the double sector walls (2,3,4,5) define four variable volume chambers (31,32,33,34) in everyone of which, during a complete revolution of the driving-shaft (12) about its axis, the four strokes of intake of mixture, compression, combustion and exhaust occur.

## Description

The present invention generally relates to an internal combustion engine and more precisely it relates to an improved rotary engine.

In the engine field, rotary internal combustion engines have been widely studied as effective alternative to reciprocating engines in particular when high torques are required. Rotary engines technology at the present time comprises a large number of different structures among which engines cinematically corresponding to the Zens-type have been significantly tested. These engines comprise movable combustion chambers which are defined by elements such as septa or pistons, running after one another with cyclically changing speed, in order to periodically approach and move away from one another.

More precisely in the rotary engines using Zens-like cinematism until now tested, such as Kauertz and Sabet engines at least a first group of said elements rotates with constant speed about the axis of the engine integrally with the driving shaft, while another group periodically approaches and moves away from the first one as a consequence of the successive strokes occurring in each chamber defined by them. For this reason these engines are not intrinsecally balanced because the angular moment is not momentarily naugth, with consequent existence of inertial forces conveying on the crankcase.

It is an object of the present invention to provide an improved rotary engine of the above described type capable at the same time to fulfill the following requirements:
- performing the four strokes (intake, compression, combustion, exhaust) four times in each revolution of the driving shaft;
- being of reduced weight and dimensions;
- allowing to reach a good thermodynamical efficiency;
- allowing to choose the most convenient compression ratio;
- performing an intrinsic dynamical balancing.

The above object is reached by the rotary internal combustion engine according to the invention comprising a cylindrical chamber in which two double sector walls rotating about a driving shaft coaxial with it are housed with edges sliding in a close fit with respect to the side and the circumferential walls of the cylindrical chamber, the latter having intake and exhaust ports as well as ignition means. The characteristic of the engine is that a first double sector wall has a first sleeve on the internal side of which said driving shaft is pivotally supported and with the external side of which a second sleeve, centrally integral to the other double sector wall, is rotatably engaged. The sleeves are rotatably guided in the side walls of the cylindrical chamber and by means of eccentric pivots rotatably engage, at one end, with connecting rods supporting pins extending from throws of a planetary gear shaft of an epiciclic train. The latter comprises a flywheel keyed on said driving shaft supporting said planetary gear shafts which in turn mesh with a fixed gear integral to a crankcase, to which said cylindrical chamber is fixed, supporting one end of the driving shaft. Inside the cylindrical chamber the two double sector walls define four variable volume chambers in each of which, during a complete revolution of the driving shaft about its axis, the four strokes of intake of mixture, compression, combustion and exhaust occur.

Further characteristics and advantages of the rotary internal combustion engine according to the present invention will be made clearer with the following description of a non limiting, exemplifying embodiment, with reference to the attached drawings.

In the drawings:
- Figure 1 shows a longitudinal cross sectional view of a rotary engine according to the invention;
- Figures 2 and 3 show cross sectional views of the engine according to arrows II-II and III-III of figure 1 respectively;
- Figures 4 and 5 show sectional detailed views of the engine according to arrows IV-IV of the figure 3 and arrows V-V of the figure 2 respectively;
- Figures 6,7,8 and 9 show schematic cross sectional views of the cylindrical chamber of the engine of figures 1 and 2 in correspondence of the four successive strokes of intake, compression, combustion, exhaust for each variable volume chamber respectively.

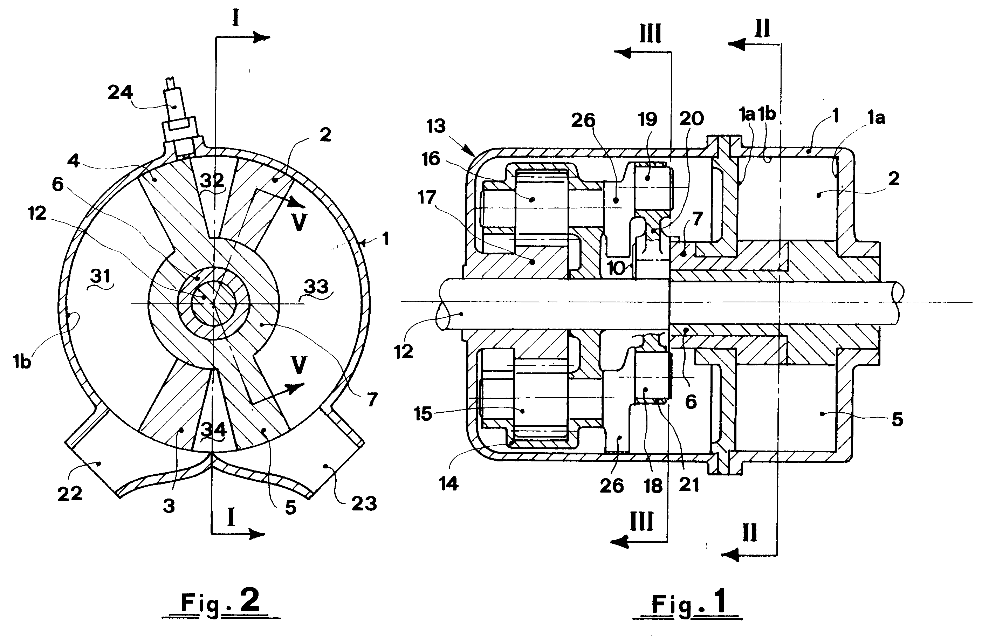

With reference to figures 1 and 2, a rotary internal combustion engine according to the invention has a cylindrical chamber 1 in which a first and a second double-sector wall are housed, comprising sector walls 2, 3 and 4, 5 respectively and rotating about a driving-shaft 12 coaxial with them. The edges of the sector walls tightly slide with respect to the side and circunferential walls, 1a and 1b, of the cylindrical chamber 1. To assure the best seal between chamber 1 and double-sector walls, seal elements can be provided for on the edges of the latter.

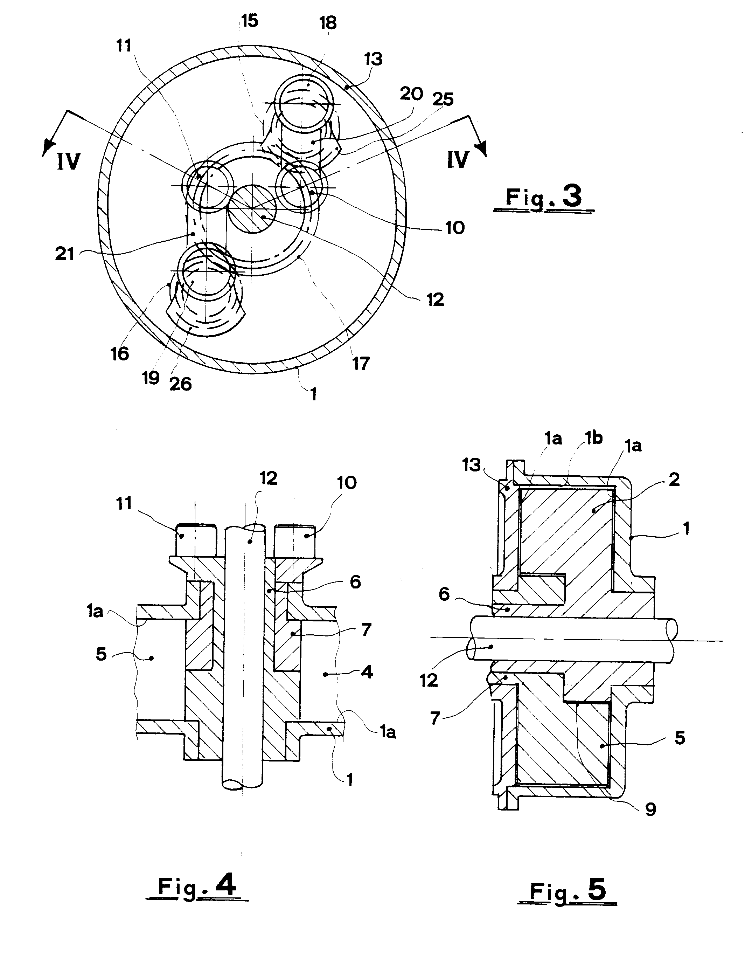

The first double-sector wall 2, 3 has a first sleeve 6 on the internal side of which driving-shaft 12 is pivotally supported, and with the external side of which a second sleeve 7 centrally integral to the other double-sector wall 4, 5 is rotatably engaged, as also shown in figures 4 and 5. The sleeves 6 and 7 are rotatably guided in a side wall 1a of the cylindrical chamber 1 and rotatably engage, by means of eccentric pivots 10 and 11, with connecting rods 20 and 21 respectively. These rods pivotally support pins 18 and 19 extending from throws 25 and 26 of planetary gear shafts 15 and 16 of an epicyclic train comprising a flywheel 14, operating as a spider wheel, keyed on the driving-shaft 12 and supporting the planetary gear shafts 15 and 16. The latter, in turn, mesh with a fixed gear 17 integral to a crankcase 13 which supports driving-shaft 12 and is integral to cylindrical chamber 1. The diameter of fixed gear 17 is twice the diameter of planetary gear shafts 15 and 16.

Sector walls 2, 3, 4, 5 inside cylindrical chamber 1, define four variable volume chambers 31, 32, 33, 34 in everyone of which, during a complete revolution of driving-shaft 12 about its axis, the four strokes of intake of mixture, compression, combustion and exhaust occur. For this reason, cylindrical chamber 1 is provided with an intake port 22, an exhaust port 23, and an ignition spark plug 24 which are made angularly spaced on the circumferential wall 1b as shown in figure 2. In particular spark plug 24 is substantially opposite to ports 22 and 23.

Concerning the operation of the rotary engine, when driving shaft 12 uniformly rotates about its axis together with flywheel 14, planetary gear shafts 15 and 16 rolls on fixed gear 17 swivelling about their own axes together with throws 25 and 26. The latter cause an uneven rotation of sleeves 6 and 7 by means of connecting rods 20 and 21.

For this reason the rotary motion of sector walls 2, 3, 4, 5 about driving-shaft 12 is not uniform and, in particular, is periodically accelerated and retarded according to the position of connecting rods 20 and 21 with respect to throws 25 and 26 of planetary gear shafts 15 and 16.

The motion of the sector walls is the result of an overlap of both an alternate motion with respect to one another and a rotation about driving-shaft 12 thus causing a rotation and a cyclical volume variation of chambers 31, 32, 33, 34. The alternate motion of each sector wall, with respect to the other two adjacent ones, is performed in mutual phase opposition with consequent intrinsic dynamical balancing (the angular moment is momentarily naught) in virtue of the presence of only internal pressure forces which are not transmitted to the crankcase and the driving shaft.

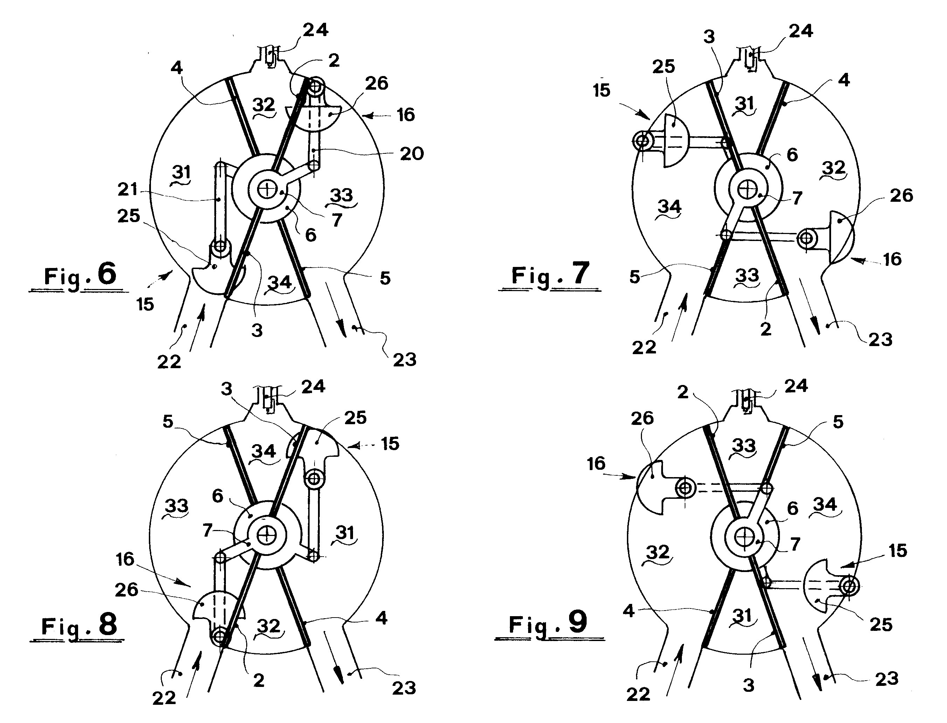

With reference to figure 6, in chamber 31 the compression of the mixture sucked through intake port 22 is beginning; in chamber 32 is taking place the combustion of the mixture compressed; in chamber 33 expansion of burnt gasses is ended and their exhaust through port 23 occurs, while in chamber 34 exhaust is just ended and sucking of mixture is going to begin.

More precisely connecting rod 20, engaging with throw 26 of planetary gear shaft 16, is at its bottom dead center: both sector wall 2, providing to exhaust in chamber 33, and sector wall 3, providing to compression in chamber 31, are now accelerated and sweep an angle of about 140° instead of 90° of flywheel 14 and driving-shaft 12. Inversely, sectors 4 and 5, actioned by throw 25 of planetary gear shaft 15, which are (figure 6) at their top dead center, are now retarded in their motion sweeping an angle of about 40°. The negative work performed by gasses on sector 4 during the expansion is overcome by the greater positive work performed by the same gasses on sector 2 which sweeps a larger angle.

The retarded motion to which the sector walls are selectively subjected allows a better exploitation of the whole volume of chamber 1 during each revolution of driving shaft 12, thus improving the thermodynamical efficiency of the engine itself.

The above angles can be changed by varying the length of connecting rods 20, 21 and of throws 25, 26, thus allowing the choose of the most convenient compression ratio and other operating and cynematic parameters of the engine. Also the position of ports 22 and 23 as well as the position of spark plug 24 can be varied with respect to figures 2,6,7,8,9 according to the usual timing requirements of internal combustion engines.

In figure 7 chambers 31,32,33,34 and flywheel 14 have rotated of 90° and a new stroke begins for each chamber. Each sector wall has reached the position of the successive one while the throw and the connecting rod which where at the bottom dead center are now at the top dead center 1, and viceversa for the other throw and rod.

Similarly, as shown in figures 8 and 9, the engine begins (chambers 34 and 33) other two combustion strokes when the driving shaft has rotated of angles of 180° and 270° with respect to figure 6.

After a complete revolution of flywheel 14, and then of driving-shaft 12, four complete strokes for each variable volume chamber have been performed by the engine according to the invention. In virtue of the almost constant speed of flywheel 14, the torque of the rotary engine according to the invention, is particularly even. The torque can be indifferently took off at any end of driving-shaft 12.

In the improved rotary internal combustion engine according to the invention the above object is reached and in particular:
- a good thermodynamical efficiency is obtained;
- a convenient compression ratio can be chosen;
- an intrinsic dynamical balancing occurs.

In virtue of the four combustions for each revolution of the driving shaft the engine is thermodynamically equivalent to a two stroke, four cylinders or a four stroke, eight cylinders engine.

## Claims

1. Improved rotary internal combustion engine comprising a cylindrical chamber (1) in which two double sector-walls (2,3,4,5) rotating about a coaxial driving-shaft (12) are housed with edges tightly sliding with respect to the side (1a) and the circumferential (1b) walls of said cylindrical chamber (1), the latter having intake and exhaust ports (22,23) as well as ignition means (24), characterized in that a first double-sector wall (2,3) has a first sleeve (6) on the internal side of which said driving-shaft (12) is pivotally supported, and with the internal side of which a second sleeve (7) centrally integral to the other double sector wall (4,5), is rotatably engaged, each sleeve (6,7) pivotally engaging with a side wall (1a) of said cylindrical chamber (1) and by means of eccentric pivots (10,11) rotatably engages at one end with a connecting rod (20,21) supporting a pin extending from a throw (25,26) of a planetary gear shaft (15,16) of an epicyclic train, the latter comprising a flywheel (14) keyed on said driving shaft (12) supporting said planetary gear shafts (15,16) which in turn mesh with a fixed gear (17) integral to a crankcase (13) supporting the driving shaft (12) and integral to said cylindrical chamber (1),inside the latter said double sector walls (2,3,4,5) defining four variable volume chambers (31,32,33,34) in everyone of which, during a complete revolution of the driving shaft (12) about its axis, the four strokes of intake of mixture, compression, combustion and exhaust occur.

2. Rotary engine according to claim 1, wherein said fixed gear (17) has a diameter which is twice the one of said planetary gear shafts (15,16).

3. Rotary engine according to claims 1 and 2, wherein said ignition means comprises a spark plug (24) housed in said circumferential wall (1b) of said cylindrical chamber (1), said spark plug (24) being substantially opposite to said intake and exhaust ports (22,23).

4. Rotary engine according to the previous claims, wherein said crankcase (13) is coaxially flanged to said cylindrical chamber (1).
